# EUROPEAN PATENT APPLICATION

(11) **EP 2 518 642 A1**
(43) Date of publication of application: **31.10.2012**
(21) Application number: 10851271.6
(22) Date of filing: 25.08.2010
(51) Int. Cl.: G06F 17/30

(54) **METHOD AND TERMINAL DEVICE FOR UPDATING WORD STOCK**

(30) Priority: 11.05.2010 CN 201010174530
(71) Applicant: ZTE Corporation, Shenzhen, Guangdong 518057 (CN)
(72) Inventor: LIN, Xuebin, Shenzhen Guangdong 518057 (CN); ZHANG, Zhiping, Shenzhen Guangdong 518057 (CN); FU, Qihong, Shenzhen Guangdong 518057 (CN); WANG, Haowen, Shenzhen Guangdong 518057 (CN)
(74) Representative: Tischner, Oliver
(86) International application number: PCT/CN2010/076329
(87) International publication number: WO 2011/140766

(57) **Abstract**

The present disclosure discloses a terminal device and word stock update method thereof. In the terminal device, an acquisition module acquires a keyword related to the current region of the terminal device; an update module adds the keyword to a first personal word stock; and an output module searches the first personal word stock for a word corresponding to a currently-input index and outputting the found word. By using the terminal device and the word stock update method thereof, a keyword of the current region of the terminal device can be added to a personal word stock of the terminal device, so that a user can input a word related to the current region quickly to improve input efficiency.

## Description

### TECHNICAL FIELD

The present disclosure relates to a technology for updating a word stock for the use of an input method of a terminal device such as a handset, and more particularly to a terminal device and a word stock update method thereof.

### BACKGROUND

With continuous development of 3G and mobile internet technologies, more and more consumers desire to enjoy a full network experience on handsets. As a link for a human-computer interaction, the input method of a handset is undoubtedly the foundation of applications of the handset and the mobile internet and is a superb shortcut for improving the experience on the applications of mobile internet.

Along with the increasing applications of the mobile internet, it is required that an input method of a handset should be intelligent, integrated, personalized and excellent in user experience, and the users having different occupations, interests and habits in handset use have higher and higher requirements on the input method of a handset.

The input method of a handset mainly involves three aspects: intelligent input, intelligent processing and intelligent output. Intelligent input and intelligent processing are prerequisites to intelligent output. Taking a Chinese input method as an example, single Chinese characters are input to form words, which together construct a complete sentence. It is required that the Chinese input method should achieve a comprehensive coverage with single Chinese characters as a basis and a fast and convenient use of words as a core. There are tens of thousands of Chinese characters, so it is impossible to configure a button for each Chinese character. Therefore, it is needed to encode Chinese characters and link these codes with keys on a keyboard, so that after the code of a Chinese character is input via the keyboard, the code can be converted into a Chinese character.

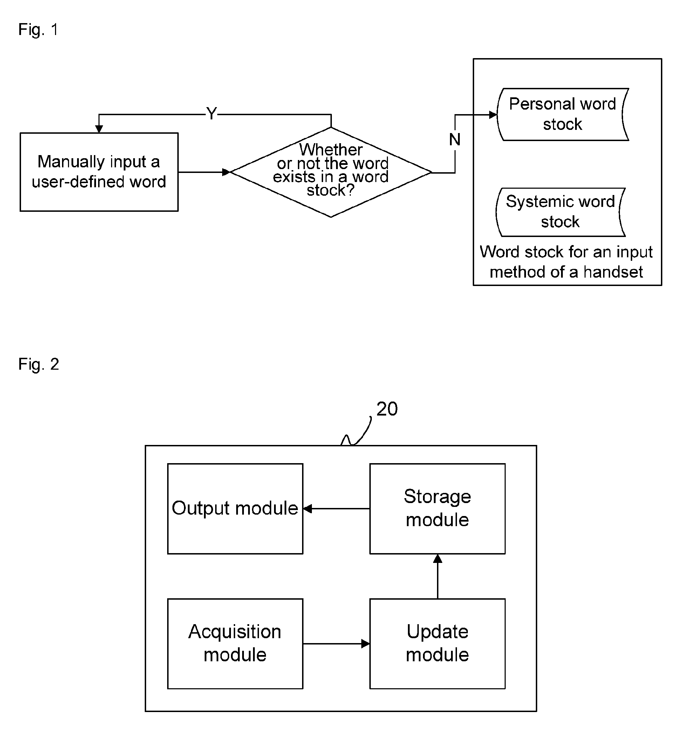

In general, each input method is provided with a systemic word stock, and each key is matched with the code of a character stock in the systemic word stock so as to realize the input of a character; however, as the systemic word stock is relatively fixed, it is difficult to realize an exact match for users in different regions or users having different input habits. In order to increase character input efficiency, a scheme of adding a personal word stock is proposed in the related art, according to which user-constructed words can be added to the personal word stock. Referring to Fig. 1, a user-defined word is input manually, then, a determination is made on whether or not the user-defined word exists in a word stock, if so, the currently-added word is discarded and adds the next word, otherwise, the user-defined word is added to the word stock, and as a consequence, the newly-added word can be output quickly during the next input.

The inventor finds that this personal word stock addition method is relatively inflexible and incapable of conforming to use habits of users engaging in all fields and therefore fails to manifest the features of current handset input methods such as intellegence and personalization and the convenience brought by a 3G mobile internet. For instance, the personal word stock addition method cannot enable a user in a certain region to input a name of a street or a building in the certain region or a name of a surrounding landmark hotel or restaurant.

### SUMMARY

The technical solution the present disclosure is to provide a terminal device and a word stock update method thereof, which are capable of adding a keyword of the region where the terminal device locates currently to a personal word stock of the terminal device so that a user can quickly input a word related to the current region, thus input efficiency is improved.

In order to address the above technical problem, there is provided a terminal device in an embodiment of the present disclosure, which comprises an acquisition module, an update module and an output module, wherein
the acquisition module is used for acquiring a keyword related to a region where the terminal device locates currently;
the update module is used for adding the keyword to a first personal word stock; and
the output module is used for searching the first personal word stock for a word corresponding to a currently-input index and outputting the found word.

The terminal device may further comprise a storage module for storing the first personal word stock of the terminal device.

The acquisition module may further comprise a Global Positioning System (GPS) unit and an acquisition subunit, wherein
the GPS unit is used for determining the region where the terminal device locates currently; and
the acquisition subunit is used for acquiring the keyword related to the region where the terminal device locates currently from an electronic map about the region where the terminal device locates currently.

The first personal word stock may be a GPS personal word stock; and the update module is further used for adding the keyword to the GPS personal word stock.

In the terminal device, the update module may be further used for comparing the keyword with words in the GPS personal word stock, discarding the currently-added keyword if the currently-added keyword already exists in the GPS personal word stock, and then adding a next keyword until all acquired keywords are added to the GPS personal word stock.

In the terminal device, the storage module may be further used for storing a second personal word stock and a systemic word stock of the terminal device, wherein the second personal word stock is a word stock storing user-defined words, and the systemic word stock is an original input-method word stock of the terminal device.

In the terminal device, the update module may be further used for acquiring a use frequency of the keyword in the first personal word stock and deleting the keyword from the GPS personal word stock if the use frequency of the keyword is lower than a predetermined threshold.

In order to address the above problem, the present disclosure may also provide a word stock update method of a terminal device, which comprises the following steps of:
a keyword related to the region where the terminal device locates currently is acquired;
the keyword to a first personal word stock is added; and
the first personal word stock for a word corresponding to a currently-input index is found and the found word is output.

In the method, acquiring a keyword related to the region where the terminal device locates currently may comprise:
the GPS of the terminal device positions the region where the terminal device locates currently; and acquires the keyword related to the region where the terminal device locates currently from an electronic map about the region where the terminal device locates currently.

The first personal word stock may be a GPS personal word stock; and adding the keyword to the first personal word stock is adding the keyword to the GPS personal word stock.

After the step of searching the first personal word stock for the word corresponding to the currently-input index and outputting the found word, the method may further comprise:
a use frequency of the keyword in the first personal word stock is acquired, and the keyword is deleted from the first personal word stock if the use frequency of the keyword is lower than a predetermined threshold.

The technical solution of the present disclosure has the following advantages: a manual input step is saved by acquiring a keyword of the current region of a terminal device and adding the acquired keyword to a first personal word stock with an acquisition module, therefore the input efficiency of the user is improved.

### BRIEF DESCRIPTION OF THE DRAWINGS

Fig. 1 is a flowchart illustrating an existing personal word stock update method;
Fig. 2 is a diagram illustrating a structure of a terminal device provided herein;
Fig. 3 is a schematic diagram illustrating a monitor log of a GPS unit of a terminal device; and
Fig. 4 is a detailed flowchart illustrating a word stock update method of a terminal device.

### DETAILED DESCRIPTION

To clarify the technical problem to be addressed, the technical scheme, and the advantages of the present disclosure, the present disclosure is described below in detail with reference to accompanying drawings in conjunction with specific embodiments.

In order to address the problem that existing terminal devices such as a handset are incapable of providing an effective update to a personal word stock and therefore lead to low input efficiency, the present disclosure provides a terminal device and a word stock update method thereof to help a user input a word related to the current region quickly to improve the input efficiency of the user.

As shown in Fig. 2, in an embodiment of the present disclosure, there is provided a terminal device, which comprises:
a storage module, which stores a first personal word stock of the terminal device;
an acquisition module, which acquires a keyword related to the current region of the terminal device;
an update module, which adds the keyword to a first personal word stock; and
an output module, which searches the first personal word stock for a word corresponding to a currently-input index and outputs the found word.

In the terminal device, the first personal word stock refers to a personal word stock arranged in the terminal device to provide a dedicated record for keywords related to the current region of the terminal device, wherein the keywords mainly include: the name of an important landmark street or building in the current region of the terminal device. When a user desires to input the name of an interested building in the region of the terminal device, the user in that region may input an index (e.g., the PINYIN of a word or an abbreviation of the PINYIN of a word) of the name of the building to find a matched building name quickly, therefore, the input efficiency of the user is improved.

Specifically, in the above embodiment, the acquisition module may comprise:
a GPS unit, which is used for positioning the region where the terminal device locates currently; and
an acquisition subunit, which is used for acquiring a keyword related to the current region of the terminal device from an electronic map of the region where the terminal device locates currently.

Accordingly, the first personal word stock is a GPS personal word stock.

Specifically, the process that the update module adds the keyword to the GPS personal word stock is as follows: the update module compares the keyword with the words in the GPS personal word stock, discards the keyword if the keyword has already existed in the GPS personal word stock, and then adds the next keyword until all the keywords to be added are in the GPS personal word stock.

The acquisition module can also be a positioning module of a terminal device such as a handset, for instance, the positioning module of a handset can automatically position the region where the handset locates currently, wherein the region may be a region covered by a base station to which the handset currently belongs or an overlapped region covered by base stations to which the handset currently belongs, wherein the GPS unit is more accurate than the positioning module of the terminal device for positioning the current region of the terminal device.

In the terminal device, the storage module is further used for storing a second personal word stock and a systemic word stock of the terminal device, wherein the second personal word stock is a local personal word stock which stores user-defined words, and the systemic word stock is an original word stock for the use of an input method of the terminal device.

In this embodiment, the words in the GPS personal word stock have a higher priority than those in the second personal word stock and the systemic word stock, so that the words in the GPS personal word stock are read or associated immediately when the same key input is given, so as to improve the word selection efficiency of the user. Certainly, the priorities of the first and the second personal word stock and the systemic word stock can be set freely. However, the description only focus on a case that the words in the GPS personal word stock have a higher priority than those in the second personal word stock and the systemic word stock.

In addition, the update module is further used for acquiring the use frequency of the keyword in the GPS personal word stock and deleting a keyword from the GPS personal word stock if the use frequency of that keyword is lower than a predetermined threshold. That is, as the region where the terminal device locates changes, the update module automatically deletes the keywords added in the GPS personal word stock in the former region and used seldom in the current region so as to dynamically update the GPS personal word stock of the terminal device upon the region change of the terminal device, thereby increasing the input efficiency of the user and saving the storage space of the terminal device.

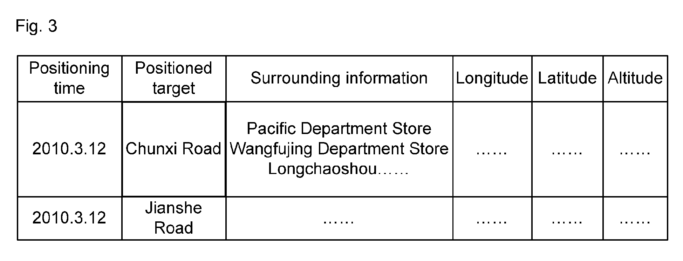

The flow of a dynamic update to a personal word stock of the terminal device is described below on condition that the terminal device refers to a handset, wherein the flow comprises the following steps:
(a) automatically positioning the region where the handset locates currently by using the navigation positioning function of the GPS of the handset;
(b) acquiring, after the GPS completes the positioning, keywords such as names of all landmark streets and buildings in the current region of the handset from an electronic map of the current region of the handset, and recording the keywords in a monitor log of the GPS, wherein the monitor log is in, for example, a format shown in Fig. 3;
(c) linking to and opening the monitor log of the GPS;
(d) adding the names of all positioned streets and buildings recorded in the monitor log of the GPS to the GPS personal word stock for the use of an input method of the handset; and
(e) after the addition is completed successfully, conducting, when the user inputs characters, a quick input match for the names of all important landmark streets and buildings in the current region.

Compared with existing technical scheme in which a manually-updated word is added to a local personal word stock, the embodiment, in which a positioning is realized with a GPS and positioned keywords are automatically added to the GPS personal word stock, is free from a manual input process and improves the input efficiency of the user by conducting a quick match to find the information on a building or street in the region of the user.

Further, in this embodiment, the words in the GPS personal word stock have a higher priority than those in the second personal word stock and the systemic word stock, so that the words in the GPS personal word stock are read or associated first when the same key input is given. As a result, the word selection efficiency of the user is improved.

Further, in this embodiment, as the current region of the handset changes, the words that are added to the GPS personal word stock in the former region is automatically deleted from the GPS personal word stock to achieve a dynamic update to the GPS personal word stock to save storage space of a handset.

A word stock update method of a terminal device is provided in an embodiment of the present disclosure, wherein the method comprises the following steps:
acquiring a keyword related to the current region of the terminal device;
adding the keyword to a first personal word stock;
searching the first personal word stock for a word corresponding to a currently-input index and outputting the found word.

In the method, the first personal word stock refers specifically to a GPS personal word stock newly added in present disclosure. Acquiring a keyword related to the current region of the terminal device comprises: using the GPS of the terminal device to position the region where the terminal device locates currently; and acquiring, from an electronic map of the current region of the terminal device, a keyword related to the current region of the terminal device.

Specifically, adding the keyword to the first personal word stock specifically comprises: adding the keyword to the GPS personal word stock.

Similarly, compared with existing technical scheme in which a manually-updated word is added to a local personal word stock, this embodiment, in which a positioning is realized with a GPS and the positioned keywords are automatically added to the GPS personal word stock, is free from a manual input process and improves the input efficiency of the user by conducting a quick match to find the name of a building or street in the region of the user.

In this embodiment, the words in the GPS personal word stock have a higher priority than those in the second personal word stock and the systemic word stock, so that the words in the GPS personal word stock are read or associated first when the same key input is given, therefore, the word selection efficiency of the user is improved.

Further, after the step of searching the first personal word stock for a word corresponding to a currently-input index and outputting the found word, the method may further comprise a step of:
acquiring the use frequency of a keyword in the GPS personal word stock and deleting the keyword from the GPS personal word stock if the use frequency of the keyword is lower than a predetermined threshold. That is, as the region where the handset locates changes, the keywords added in the GPS personal word stock in the former region and used seldom in the current region are deleted from the GPS personal word stock to dynamically update the GPS personal word stock of the handset upon the region change of the handset, thereby increasing input efficiency of a user and saving storage space of the handset.

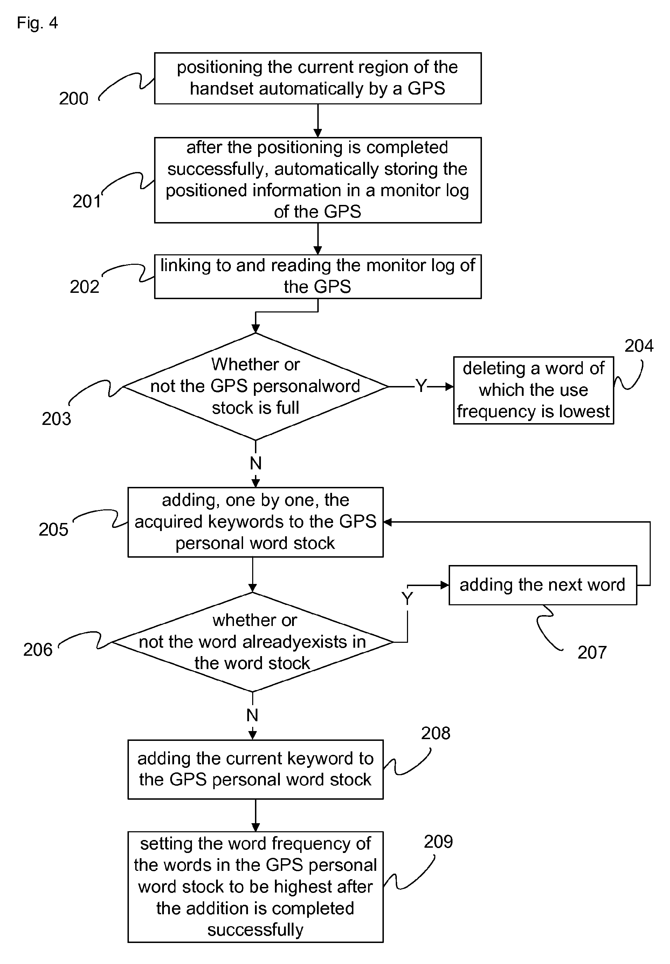

The dynamic word stock update flow of the terminal device is described in detail below with reference to Fig. 3 and Fig. 4, wherein Fig. 3 is a diagram illustrating a monitor log of a GPS and Fig. 4 is a detailed flowchart illustrating an automatic region-based word stock update flow of a terminal device. In this embodiment, a terminal device refers to but is not limited to a handset, and this flow comprises the following steps:
Step 200: positioning the current region of the handset automatically by a GPS;
Step 201: acquiring, after the positioning is completed successfully, information of all landmark streets and buildings (e.g. restaurants and schools) around the current region from an electronic navigation map of the GPS according to the positioning accuracy and range of the GPS, wherein the information is automatically stored in a monitor log of the GPS, which is in, for example, a format shown in Fig. 3, so as to record detailed information resulting from the positioning of the GPS.
Step 202: linking to the monitor log and reading words in two columns 'positioned target' and 'surrounding information' in the monitor log of the GPS.
Step 203: checking whether the space of the GPS personal word stock is full or not; if so, turning to Step 204, otherwise, turning to Step 205.
Step 204: based on the fact that a handset has a limited storage space, deleting words dynamically from the GPS personal word stock according to the region change of the handset and the space size of the GPS personal word stock as needed so as to control the storage space of the handset effectively, wherein the principle for the dynamic GPS personal word stock update is that: the word of which the use frequency is lowest is deleted from the GPS personal word stock.
Step 205: adding, one by one, keywords read from the monitor log file of the GPS to the GPS personal word stock after making a determination on whether or not words to be added have already existed in the current GPS personal word stock of the handset, and then turning to Step 206.
Step 206: comparing a word to be added with words in the word stock for the use of an input method of the handset, turning to Step 207 if the word to be added is contained in the word stock, or turning to Step 208 if the word to be added is not contained in the word stock.
Step 207: discarding the current word to be added, and returning to Step 205 to add the next word.
Step 208: adding the read word to the GPS personal word stock, for instance, if the positioning finds that the region where the handset locates currently is ' 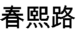 ' ('Chunxi Road') and the keywords of surrounding landmark buildings are ' 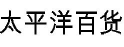 ' ('Pacific Department Store'), ' 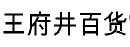 ' ('Wangfujing Department Store') and ' 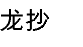 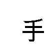 ' ('Longchaoshou') etc., then these keywords related to this region are added to the GPS personal word stock.
Step 209: generally, the order of the read words may be adjusted in the related art according to use frequencies of the words. That is, in order to improve the region-related word input efficiency of the user, a word frequency adjustment is implemented in the related art to set the word frequencies of the words in a network personal word stock (that is, a GPS personal word stock) to be higher than those of the words in the systemic word stock and the local personal word stock, so that the words in the network personal word stock always have the highest priority in a candidate word selection process and always displayed at the first place.

The user can quickly input words added to the word stock through the positioning of a GPS. For instance, taking a Pinyin input method as an example, if the user desires to input a name ' 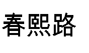 (Chunxi Road)', the user can input an index, that is, the pinyin 'chunxilu' or the abbreviation 'cxl' of the pinyin 'chunxilu', through which the name ' 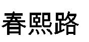 (Chunxi Road)' can be output; or the user can input the first character ' 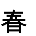 (Chun)', after which characters ' 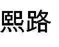 (xilu)' will be automatically associated to appear at the first place. In this way, the time spent on a candidate word selection is saved, and the input efficiency is improved.

The above steps illustrate the process that the GPS personal word stock for the use of an input method of a handset is dynamically updated as the region of the handset changes.

It can be seen that the above embodiments effectively realize a dynamic update to a personal word stock for the use of an input method of a handset, enrich word stocks for the use of the input method, improve the character input efficiency of the user, and therefore manifest the features of existing handset input methods such as intellegence and personalization.

In conclusion, compared with the related art, the present disclosure has the following advantages:
(a) By performing a dynamic region-based update to a personal word stock using Internet and GPS positioning technologies, the present disclosure satisfies the actual demands of the user, manifests the features of existing handset input methods such as intellegence and personalization, and improves the input efficiency of the user.
(b) In the present disclosure, a determination is made on whether or not to update a personal word stock according to the GPS-positioned region of a handset and, based on the fact that the storage space of a handset is limited, the handset deletes seldom-used words from updated GPS personal word stock according to the region change of the handset, thereby preventing a significant handset storage space occupation so as to guarantee operation efficiency of the handset.

The above mentioned is only preferred embodiments of the present disclosure, it should be noted that various modification and improvements can be devised by those skilled in this art without departing from the spirit and scope of the principles of this disclosure, and that all modifications and improvements fall within the scope of the protection of the present disclosure.

## Claims

1. A terminal device, comprising an acquisition module, an update module and an output module, wherein
the acquisition module is configured to acquire a keyword related to a region where the terminal device locates currently;
the update module is configured to add the keyword to a first personal word stock; and
the output module is configured to search the first personal word stock for a word corresponding to a currently-input index and output the found word.

2. The terminal device according to claim 1, further comprising: a storage module configured to store the first personal word stock of the terminal device;
the acquisition module further comprises a Global Positioning System (GPS) unit and an acquisition subunit, wherein
the GPS unit is configured to determine the region where the terminal device locates currently; and
the acquisition subunit is configured to acquire the keyword related to the region where the terminal device locates currently from an electronic map about the region where the terminal device locates currently.

3. The terminal device according to claim 2, wherein the first personal word stock is a GPS personal word stock; and
the update module is further configured to add the keyword to the GPS personal word stock.

4. The terminal device according to claim 3, wherein the update module is further configured to compare the keyword with words in the GPS personal word stock, discard the current keyword if the current keyword already exists in the GPS personal word stock, and then add a next keyword until all acquired keywords are added to the GPS personal word stock.

5. The terminal device according to claim 3, wherein the storage module is further configured to store a second personal word stock and a systemic word stock of the terminal device, wherein the second personal word stock is a word stock for storing user-defined words, and the systemic word stock is an original input-method word stock of the terminal device.

6. The terminal device according to any one of claims 3-5, wherein the update module is further configured to acquire a use frequency of the keyword in the first personal word stock, and delete the keyword from the GPS personal word stock if the use frequency of the keyword is lower than a predetermined threshold.

7. A word stock update method of a terminal device, comprising:
acquiring a keyword related to a region where the terminal device locates currently;
adding the keyword to a first personal word stock; and
searching the first personal word stock for a word corresponding to a currently-input index and outputting the found word.

8. The method according to claim 7, wherein the acquiring the keyword related to the region where the terminal device locates currently comprises:
determining the region where the terminal device locates currently by using a Global Positioning System (GPS) of the terminal device; and
acquiring the keyword related to the region where the terminal device locates currently from an electronic map about the region where the terminal device locates currently.

9. The method according to claim 8, wherein the first personal word stock is a GPS personal word stock; and
the adding the keyword to the first personal word stock is adding the keyword to the GPS personal word stock.

10. The method according to claim 9, further comprising: after searching the first personal word stock for the word corresponding to the currently-input index and outputting the found word,
acquiring a use frequency of the keyword in the first personal word stock, and deleting the keyword from the GPS personal word stock if the use frequency of the keyword is lower than a predetermined threshold.
